# EUROPEAN PATENT APPLICATION

(11) **EP 4 759 131 A1**
(43) Date of publication of application: **17.06.2026**
(21) Application number: 25223679.9
(22) Date of filing: 16.12.2025
(51) Int. Cl.: A01G 25/09, A01G 25/16

(54) **A METHOD OF COMMAND AND/OR CONTROL FOR AN IRRIGATION SYSTEM AND A COMMAND AND/OR CONTROL DEVICE IMPLEMENTING SAID METHOD**

(30) Priority: 16.12.2024 IT 202400028581
(71) Applicant: Lombardi, Paolo, 47522 Cesena (FC) (IT)
(72) Inventor: Lombardi, Paolo, 47522 Cesena (FC) (IT)
(74) Representative: Studio Torta S.p.A.

(57) **Abstract**

A command and/or control method for a self-propelled reel irrigation system (2) configured to irrigate a plot of land with a liquid, in particular water; the irrigation system (2) comprises a command and/or control apparatus (1) configured to execute the method comprising the steps of: cyclically detecting at least one parameter of the irrigation system (2) by means of at least one detection means (11) to detect said parameter; verifying the operating condition of the irrigation system (2) according to the detected parameter; and commanding and/or controlling the irrigation system (2) by means of a command and/or control unit (12) of the apparatus (1) so as to: allow or continue the irrigation, if the verification step reveals an operating condition of the irrigation assembly (4), in which the detected parameter is within the limit threshold; or prevent or stop the irrigation, if the verification step reveals an operating condition of the irrigation assembly (4), in which the detected parameter is outside the limit threshold.

## Description

### Cross-reference to related applications

This patent application claims priority from Italian patent application no. 102024000028581 filed on December 16, 2024, the entire disclosure of which is incorporated herein by reference.

### Technical field

The present invention relates to a command and/or control method for an irrigation system comprising a command and/or control apparatus configured to execute the method.

The present invention is advantageously, but not limitedly, applied to irrigation systems for irrigating plots of land, in particular agricultural fields or green areas.

More specifically, the present invention is advantageously, but not limitedly, applied to self-propelled reel irrigation systems (also known as hose rollers).

### Background

Fixed-line irrigation systems (i.e., systems, in which the at least one hose has a fixed and unchanging position over time, such as the irrigation systems used in orchards which always maintain the same position for the entire duration of the orchard) or self-propelled machines, such as reel irrigation (in which the at least one hose, as well as the irrigation means, have a position varying over time) are known to be used to irrigate plots of land.

Reel irrigation systems typically comprise a supply assembly (known as hose roller) and an irrigation assembly (also known as self-propelled appendage) towed by the supply assembly (namely by the hose roller). At the beginning of each irrigation cycle, by towing the irrigation assembly along the plot of land, the supply hose is unrolled along the plot of land, and during the irrigation, thanks to the pressure of the irrigation liquid flow, the supply assembly automatically rewinds and tows the irrigation assembly connected thereto towards itself, while rewinding the supply hose.

An example of irrigation system of the known type is described in CN111406620. From CN111406620 it is known to detect the moisture of the soil (in particular, at the roots of the crops), to verify whether the soil moisture is sufficient.

However, the irrigation systems currently known have a plurality of disadvantages.

Firstly, in the event the supply hose breaks (resulting in the leakage of the liquid under pressure), the irrigation assembly of reel irrigators of the known type continues to operate, reducing the pressure (and, therefore, the actual flow rate) of the liquid coming out of the irrigation assembly 4, as well as the throw radius of the irrigation means. In other words, since the systems of the known type are not able to detect the possible breakage of the supply hose, the irrigation liquid consequently spills into the plot of land surrounding the breakage area, leading to undesired flooding of that plot of land.

In use, the systems of the known type have sometimes the disadvantage of undergoing the overturning (tipping) of the irrigation assembly of the irrigation system (due to breakage or damage to components, such as a wheel of the trolley of the irrigation assembly), crushing the field and/or the crop underneath. Furthermore, due to the overturning (especially of the irrigation assemblies), the uncontrolled spillage of the liquid also occurs, which floods the area surrounding the irrigation assembly.

In addition, in reel irrigation systems, it may happen that the irrigation assemblies go off the pre-established path (e.g., due to the underlying ground which may be wet and therefore slippery, or uneven or sloping) or that the irrigation means gets stuck (as can be the case in irrigation assemblies provided with a jet).

Thus, in the event of issues or breakages, systems of the known type (especially jet systems) do not allow to perform uniform irrigations of the plot of land, creating more irrigated (or even flooded) areas and less irrigated areas.

It is clear that if these events are not detected immediately, significant damage occurs not only to the irrigation system, but also to the crops, creating huge economic losses.

The object of the present invention is to provide a command and/or control method for an irrigation system, comprising a command and/or control apparatus configured to execute said method, which are at least partially devoid of the drawbacks described above and are easy and cost-effective to manufacture.

A further object of the present invention is to provide an alternative solution to the technical problem set forth above.

### Summary

According to the present invention, a command and/or control method for an irrigation system is provided, according to what is claimed in the appended claims.

According to a further aspect of the present invention, a command and/or control apparatus is provided, according to what is claimed in the appended claims.

According to an additional aspect of the present invention, an irrigation system provided with said command and/or control apparatus is provided, according to what is claimed in the appended claims.

The claims describe preferred embodiments of the present invention, forming an integral part of the present description.

### Brief description of the drawings

In order to better understand the present invention, some embodiments are now described, by way of mere non-limiting example, with reference to the accompanying drawings, wherein:
- Figure 1 is a schematic view of a command and/or control apparatus executing the method in accordance with the present invention; and
- Figure 2 is a schematic perspective view (with some parts removed for the sake of clarity) of a possible form of application of the command and/or control apparatus of Figure 1.

### Description of embodiments

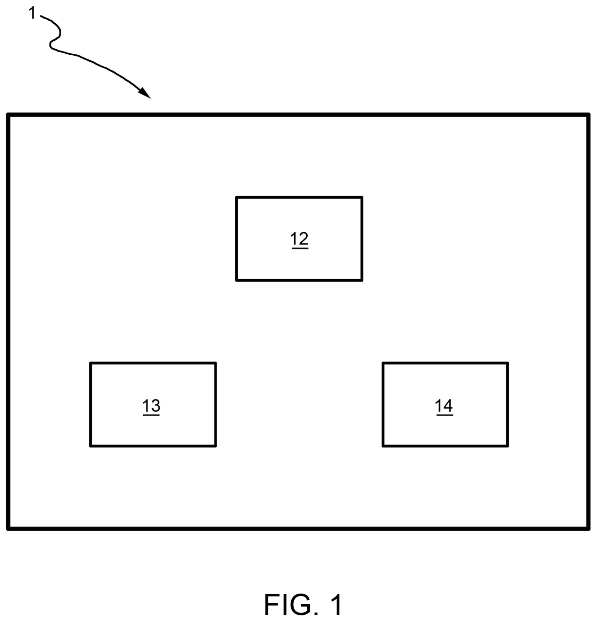

In Figure 1, reference numeral 1 indicates, in general, a command and/or control apparatus (i.e., a command and/or control electronic unit) for an irrigation system 2 configured to irrigate (to water) a plot of land with a liquid (in particular water). The apparatus 1 is configured to command and/or control (namely to monitor and/or manage/command) the irrigation system 2 by executing a command and/or control (in particular, management and monitoring) method described below. In this regard, the apparatus 1 comprises at least one command and/or control unit 12 which is configured to command and/or control the system 2.

The apparatus 1 is configured to "command", namely to provide with orders or instructions, a component of the system 1 (in particular, by generating command signals or signals determining the behaviour of other elements of the system 1) and/or is configured to "control", namely to regulate, monitor and/or verify the operation of the system 1, in order to maintain it within the desired parameters.

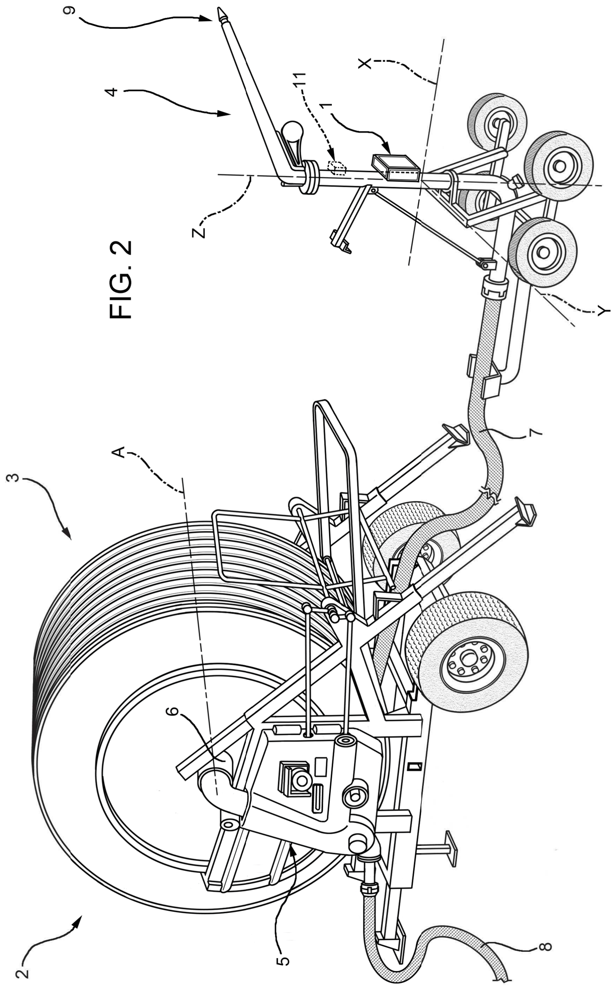

The apparatus 1 can be arranged integrally with the system 2 (i.e., arranged or mounted thereon as illustrated in Figure 2) or can be arranged separately therefrom (i.e., it can be arranged not integrally therewith). Preferably, when arranged on the system 2, the apparatus 1 is arranged at an irrigation assembly 4 thereof (which will be described below). It should be noted that the position of the apparatus on the system 2 (in particular, on the assembly 4) can be different from what illustrated in Figure 2, which is therefore purely indicative.

In the following discussion, reference will be explicitly made, without thereby losing generality, to the apparatus 1 configured to command and/or control a self-propelled reel irrigation system 2 (also known as hose roller, a possible non-limiting example of which is illustrated in Figure 2).

The self-propelled reel system 2 (which is of the known type) comprises a supply assembly 3 (also known as hose roller) and the irrigation assembly 4 (also known as appendage or self-propelled trolley).

The supply assembly 3 comprises a support structure 5 and a winding element 6 (in particular, a roller) which is supported into place by the support structure 5 and is configured to rotate about an axis A thereof, in particular an horizontal one, so as to wind or unwind a supply hose 7 for the liquid around the winding element 6. The supply hose 7 is configured to be connected to a liquid inlet hose 8, through which the liquid taken from a source (e.g., mains, canal, or the like) is supplied to the supply hose 7.

The irrigation assembly 4 is connected to the supply assembly 3 and is configured to be towed (dragged) by the supply assembly 3 by means of the supply hose 7.

The irrigation assembly 4 is connected to an end of the supply hose 7 (which is opposite the one connected to the hose 8) and comprises at least one irrigation means 9 configured to emit the liquid in order to irrigate the plot of land. The irrigation assembly 4 is movable and is configured to move being towed by the assembly 3 between two configurations, namely:
- a start-of-irrigation configuration (not illustrated), in which the irrigation assembly 4 is arranged spaced apart from the supply assembly 3 to approach the supply assembly 3, rewinding the supply hose 7 onto the winding element 6, during the irrigation. In other words, at the beginning of each irrigation cycle, the supply hose 7 is unrolled along the plot of land and then automatically rewinds (thanks to the pressure of the irrigation liquid flow) around the winding element 6 during the irrigation, so as to move the irrigation assembly 4 closer to the supply assembly 3. In particular, the rewinding can be hydraulic, with the aid of a turbine, hydraulic with the aid of a linear motion motor, or hydrostatic with the aid of an autonomous internal combustion engine.
- An end-of-irrigation configuration (schematically illustrated in Figure 2), in which the supply hose 7 is located in the proximity of the supply assembly 3.

Advantageously, the irrigation means 9 are configured for jet irrigation (in which at least one means 9, in particular a rotating spray nozzle, covers a large irrigation area) or for sprinkler irrigation (in which the at least one means 9 is arranged on a support, such as a spray boom, creating nebulized rain).

The apparatus 1 is configured to execute the command and/or control method.

The command and/or control method mainly (but not exclusively) comprises the steps of:
- cyclically detecting at least one parameter of the irrigation assembly 4 by means of at least one detection means 11 (such as a sensor) configured to detect (in particular, to measure or derive) the at least said parameter. The detection means 11 is arranged at the irrigation system 2 (in particular, at the irrigation assembly 4, as illustrated in Figure 2) or at the apparatus 1. In particular, in Figure 2, a generic detection means 11 has been schematically illustrated without losing generality. It should be noted that the position of the means 11 illustrated on the assembly 11 is purely indicative and non-limiting.
- Verifying the operating condition of the irrigation assembly 4, according to the detected parameter. In particular, the verification step is executed at least partially downstream of the detection step and upstream of a step of commanding and/or controlling the system 2. The verification step is executed by the apparatus 1.
- Commanding and/or controlling the irrigation system 2 by means of the command and/or control unit 12 (schematically illustrated in Figure 1) of the apparatus 1 so as to:
   a) allow or continue the irrigation (namely the release of liquid from the irrigation means 9, in particular by driving a respective shut-off means (in particular, a valve)), or continue the operation of the components of the irrigation system 2 which allow the release of liquid (such as a drive and/or a shut-off means) from the system 2 (in particular from the at least one irrigation means 9), if the verification step reveals an operating condition of the irrigation assembly 4, in which the detected parameter is within a limit threshold; or
   b) prevent or stop the irrigation (namely the release of liquid from the irrigation means 9 or the operation of the components of the irrigation system 2 which allow the release of liquid, such as a drive and/or a shut-off means), if the verification step reveals an operating condition of the irrigation assembly 4, in which the detected parameter is outside the limit threshold.

Advantageously, but not limitedly, the verification step is executed comparing (namely by comparison of) the detected parameter and a respective limit threshold. The limit threshold is defined by a nominal parameter or a nominal range (both pre-set or settable). In other words, in the verification step a processing occurs, in particular by comparison with the respective limit threshold of the at least one of the parameters detected by the at least one detection means 11 of the irrigation system 2. If the detected parameter satisfies the verification step (e.g., if it is within the nominal range (extremes included) or if it is equal to the nominal value) then the apparatus 1 recognizes a "correct functioning" of the system 2. If the detected parameter does not satisfy the verification step (e.g., if it is not within the nominal range (extremes included) or if it is not equal to the nominal value) then the apparatus 1 recognizes a "malfunctioning" of the irrigation assembly 4.

The at least one detected parameter is preferably selected from the following parameters (non-exhaustive list):
- A first actual orientation of the irrigation assembly 4 with respect to an axis Z which is vertical. Preferably, the first orientation is detected by means of a detection means 11A, in particular an angular velocity sensor, preferably a gyroscope. Preferably, the detection means 11A is arranged on the irrigation assembly 4. Preferably, the first actual orientation can be expressed as a degree or percent offset with respect to the axis Z.
- A second actual orientation of the irrigation assembly 4 with respect to an axis X and/or Y (which is different from the axis Z and is, in particular, orthogonal thereto), in order to identify any deviations from a theoretical path to be followed in the plot of land; wherein the axis X and/or Y is transverse, in particular orthogonal, to the axis Z; in particular, the axis X and/or Y is horizontal. Preferably, the second orientation is detected by means of a detection means 11B, in particular a geolocation means, configured to identify the actual position (which, according to a non-limiting example, could be expressed in terms of latitude, longitude and, optionally, altitude) of the irrigation assembly 4 over time. The means 11B can be, for example, a GPS system or a radio triangulation system or GNSS systems, or equivalent technologies. Preferably, the sensor can be arranged on the irrigation assembly 4. Preferably, the second actual orientation can be expressed as a degree or percentage offset with respect to the axis X and/or Y.
- An actual pressure (e.g., measured with the aid of at least one pressure switch), through which the actual flow rate of the liquid coming out of the irrigation assembly 4 (in particular, coming out of the irrigation means 9) in a predefined area of the plot of land to be irrigated is preferably determined (extrapolated); wherein the area of the plot of land to be irrigated is identified, in particular with the aid of a geolocation means 11B. Preferably, the pressure is detected by means of a detection means 11C, in particular a pressure sensor (such as a pressure switch) configured to detect the pressure of the liquid coming out of the irrigation assembly 4 in the area of the plot of land to be irrigated. Preferably, the detection means 11B and 11C are arranged on the irrigation assembly 4. More preferably, the means 11C is arranged in the proximity of or at the irrigation means 9.
- A displacement speed (along the plot of land) of the irrigation assembly 4, in particular of the at least one irrigation means 9 with respect to the plot of land. Preferably, the displacement speed is detected or extrapolated by means of a detection means 11D, in particular a velocimeter, configured to detect or extrapolate the displacement speed, or is extrapolated through the variation in the displacement over time detected with the aid of a geolocation means 11B of the irrigation assembly 4 with respect to the plot of land. Preferably, the detection means 11B and 11D are arranged on the irrigation assembly 4.

- An actual flow rate of the liquid coming out of the irrigation assembly 4 in a predefined area of the plot of land to be irrigated; wherein the area of the plot of land to be irrigated is identified, in particular with the aid of a geolocation means 11B. Preferably, the flow rate is detected by means of a flow rate detection means 11E, such as a flowmeter or liter-counter. Preferably, the detection means 11B and 11E are arranged on the system 2 (in particular, on the irrigation assembly 4). More preferably, the means 11E is arranged in the proximity of or at the irrigation means 9.
- Vibrations or impulses (blows or impacts) of the irrigation assembly 4 detected by means of a detection means 11F, such as through an accelerometer. Preferably, the detection means 11F is arranged on the system 2 (in particular, on the irrigation assembly 4).
- An oscillation of the irrigation assembly 4 about one or more axes X, Y, Z of the irrigation assembly 4. Preferably, the oscillation of the assembly 4 is detected with the aid of the detection means 11A or 11F.
- A combination of at least two of the previous parameters.

Advantageously, but not limitedly, the apparatus 1 is also configured to detect (in particular, to measure) the duration of the current irrigation cycle, detecting in particular the start time and the end time of the irrigation cycle.

Possibly, a single detection means 11 can also detect more than one parameter indicated above.

Advantageously, but not necessarily, the method also comprises a step of communicating in real time the status and progress of the irrigation (in particular, in a wired or wireless manner, such as employing 5G or radio technology) with the aid of a communication unit 13 (schematically illustrated in Figure 1) which is configured to be connectable to a mobile device (such as a smartphone, tablet or PC), in particular by monitoring and/or storing and/or graphing one or more parameters detected during a respective irrigation cycle. In particular, the step of communicating comprises a sub-step of sending a notification to the mobile device, in the event that the verification step reveals an operating condition of the irrigation assembly 4, in which the detected parameter is outside the limit threshold and/or in the event that the verification step reveals an operating condition of the irrigation assembly 4, in which the detected parameter is within the limit threshold. The communication unit 13 is preferably part of the apparatus 1.

Preferably, but not necessarily, the mobile device is configured to perform the function of a user interface configured to enter data to the apparatus 1. In this regard, the method comprises the further step of interaction between the operator and the system 2 to:
a) allow the irrigation to start or allow the irrigation to continue, if the verification step reveals an operating condition of the irrigation assembly 4, in which the detected parameter is within the limit threshold reported by the communication unit 13; or prevent the irrigation from starting or stop the irrigation, if the verification step reveals an operating condition of the irrigation assembly 4, in which the detected parameter is outside the limit threshold reported by the communication unit 13; and/or
b) enter input data for the command and/or control unit 12; in particular, the input data comprises at least one data item selected from: nominal liquid irrigation flow rate; area of the plot of land to be irrigated; nominal displacement speed, opening/closing command of any irrigation means 9 of the liquid, such as with the aid of electromechanical devices (such as a relay), command of any supply means (such as drives, pumps, turbines, also in this case with the aid of electromechanical devices, such as a relay) arranged upstream of the irrigation means 9; selection of the unit of measurement of the parameters; or a combination thereof.

Preferably, but not limitedly, the step of interaction between the operator and the irrigation system 2 (through the apparatus 1) is at least partially executed remotely and with the aid of a computer program (also known as application or simply "app" of the mobile device).

Advantageously, but not limitedly, the method comprises a step of displaying, in particular by means of the mobile device, the detected parameters and graphing the same.

Advantageously, but not limitedly, the method described so far comprises a step of storing the detected parameters in a storage unit 14 (schematically illustrated in Figure 1), so as to create a database (i.e., history), in particular for each irrigated area of the plot of land, containing all the irrigation cycles that have been executed, any "events", namely "malfunctions" reported, and the graphs related thereto.

Advantageously, but not limitedly, the database can be consulted also through the application ("app") of the internal device.

Advantageously, but not limitedly, each unit 12-14 can also perform more functions. For example, the command and/or control unit 12 can also perform the communication function and/or the storing function; or the communication unit 13 can also perform the command and/or control function, as well as the storing function; or the storage unit 12 can also perform the communication function and/or the command and/or control function.

According to a possible alternative, the steps of the method (in particular, those of detecting, verifying, commanding and/or controlling, and communicating) are executed automatically and preferably autonomously (i.e., without operator intervention) by the apparatus 1.

According to a further alternative, the steps of the method (in particular, those of detecting, verifying, commanding and/or controlling, and communicating) are executed automatically by the apparatus 1 and are at least partially executed with operator intervention.

According to a further aspect of the present invention, the system 2 comprising the apparatus 1 described above is provided.

According to an additional aspect of the present invention, a computer program (such as an application, also known as "app") is provided, comprising instructions to cause the apparatus 1 described so far to execute the steps of the method described above.

The method, apparatus 1 and system 2 described so far have a plurality of advantages.

Firstly, the apparatus 1 allows, through the detection means 11, to identify when the system 2 is not operating correctly (namely if an operating condition of the irrigation assembly 4 is detected, in which the detected parameter is outside the limit threshold), to stop the irrigations autonomously and/or by closing the shut-off means (valves) and/or by switching off drives or pumps, thus preventing damage and waste.

The apparatus 1 is configured to communicate in real time, with a mobile device of the operator, the status and progress of the irrigation. In particular, the apparatus 1 further allows to monitor in real time the physical status of the irrigation assembly 4, the inclination thereof, the geolocated position thereof, as well as the displacement speed thereof, and the duration of the irrigation cycle. In addition, the apparatus 1 is configured to calculate the time needed to switch from the start-of-irrigation configuration of the assembly 4 to the end-of-irrigation configuration of the assembly 4. Furthermore, the apparatus 1 allows, through the detection means 11 (in particular, the pressure sensor), to exactly determine (in particular, calculate) the amount (namely the flow rate) of liquid irrigated onto a predefined portion of the plot of land to be actually irrigated. Simultaneously, knowing the actual position of the irrigation system 2 (more in particular, of the irrigation assembly 4), the apparatus 1 determines, even remotely, whether the system 2 (in particular, the irrigation assembly 4) is correctly operating/irrigating.

In addition, since the apparatus 1 can communicate remotely (by means of the communication unit 13) with the operator's mobile device, it knows the precise date and time of each event, allowing the user to promptly intervene remotely.

The apparatus 1 described so far further allows to share and collect data on the status and progress of the irrigation communicated in real time of all the systems 2 provided with the apparatus 1, so as to optimize the consumption of the irrigation liquid, thus allowing to enhance the environmental sustainability.

This collected data allows to carry out scientific studies adapted to define the actual consumption of irrigation liquid according to the latitude and/or the territory at/in which the irrigation system 2 is located. It follows that, through the collected data, it is possible to establish an optimal irrigation according to the latitude and/or territory at/in which the irrigation system 2 is located.

The apparatus 1 described so far can be easily implemented even in pre-existing systems 2, without requiring major adaptation interventions, but simply by adding the apparatus 1 and the at least one detection means 11 to the system 2.

The apparatus 1 described so far can be easily implemented even in fixed-line irrigation systems 2.

## Claims

1. A command and/or control method for a self-propelled reel irrigation system (2) configured to irrigate a plot of land with a liquid, in particular water; the self-propelled reel irrigation system (2) comprising: a supply assembly (3) which in turn comprises a support structure (5) configured to support a winding element (6) and which is configured to rotate about a first axis (A) so as to wind or unwind a liquid supply hose (7); an irrigation assembly (4) connected to the supply assembly (3) and configured to be towed by the supply assembly (3) by means of the supply hose (7); the irrigation assembly comprises at least one irrigation means (9) configured to emit the liquid so as to irrigate the plot of land; and a command and/or control apparatus (1) configured to command and/or control the irrigation system (2) by executing the command and/or control method comprising the steps of:
cyclically detecting at least one parameter of the irrigation assembly (4) by means of at least one detection means (11) for detecting said parameter;
verifying the operating condition of the irrigation assembly (4), according to the detected parameter; and
commanding and/or controlling the irrigation system (2) by means of a command and/or control unit (12) of the apparatus (1) so as to:
allow or continue the irrigation, if the verification step reveals an operating condition of the irrigation assembly (4), in which the detected parameter is within a limit threshold; or
prevent or stop the irrigation, if the verification step reveals an operating condition of the irrigation assembly (4), in which the detected parameter is outside the limit threshold; wherein the at least one detected parameter is selected from:
a) a first actual orientation of the irrigation assembly (4) with respect to a vertical second axis (Z) of the irrigation assembly (4); and/or
b) a second actual orientation of the irrigation assembly (4) with respect to at least a third axis (X; Y) of the irrigation assembly (4), in order to identify any deviations from a theoretical path to be followed in the plot of land; and/or
c) an actual flow rate of the liquid coming out of the irrigation assembly (4) in an area of the plot of land to be irrigated; and/or
d) an actual pressure of the liquid coming out of the irrigation assembly (4) in an area of the plot of land; and/or
e) a displacement speed of the irrigation assembly (4) with respect to the plot of land; and/or
f) an oscillation of the irrigation assembly (4) about one or more axes (X, Y, Z) of the irrigation assembly (4); and/or
g) a combination of at least two of the above.

2. The method according to claim 1, wherein in the verification step the detected parameter is processed, in particular by comparison, with a respective limit threshold; wherein the limit threshold is defined by a nominal parameter or a range of nominal parameters.

3. The method according to claim 1 or 2, comprising a step of:
communicating in real time, with the aid of a communication unit (13) configured to be connectable to a mobile device, the status and progress of irrigation, in particular by monitoring and/or storing and/or graphing one or more parameters detected during an irrigation cycle; in particular, the step of communicating comprises a sub-step of sending a notification to the mobile device, in the event that the verification step reveals an operating condition of the irrigation assembly (4), in which the detected parameter is outside the limit threshold.

4. The method according to claim 3, wherein the mobile device is configured to perform the function of a user interface configured to enter data to the apparatus (1); and the method comprises the further step of interaction between the operator and the irrigation system (2) to:
a) allow the irrigation to start or allow the irrigation to continue, if the verification step reveals an operating condition of the irrigation assembly (4), in which the detected parameter is within the limit threshold; or prevent the irrigation from starting or stop the irrigation if the verification step reveals an operating condition of the irrigation assembly (4), in which the detected parameter is outside the limit threshold; and/or
b) enter input data for the command and/or control unit (12); in particular, the input data comprises at least one data item selected from: a limit threshold; nominal liquid irrigation pressure; area of the plot of land to be irrigated; nominal displacement speed; opening/closing command of any irrigation means (9); command of any supply means arranged upstream of the irrigation system (2); the start time of irrigation; the duration of the irrigation cycle; the unit of measurement; or a combination thereof.

5. The method according to claim 4, wherein the step of interaction between the operator and the irrigation system (2) is executed at least partially remotely and by means of a computer program of the mobile device.

6. The method according to any one of the preceding claims, wherein the steps of the method are executed:
- automatically and preferably autonomously by the apparatus (1); and
- with or without operator intervention.

7. A command and/or control apparatus (1) configured to command and/or control a self-propelled reel irrigation system (2) which is configured to execute the steps of the method according to any one of claims 1 to 6.

8. A self-propelled reel irrigation system (2) for irrigating a plot of land, comprising a command and/or control apparatus (1) according to claim 7; wherein the irrigation system (2) comprises:
a supply assembly (3) which in turn comprises a support structure (5) configured to support a winding element (6) and which is configured to rotate about a first axis (A) so as to wind or unwind a liquid supply hose (7); and
an irrigation assembly (4) connected to the supply assembly (3) and configured to be towed by the supply assembly (3) by means of the supply hose (7); the irrigation assembly (4) comprises at least one irrigation means (9) configured to emit the liquid so as to irrigate the plot of land.

9. The system (2) according to claim 8, comprising:
a first detection means (11; 11A) configured to detect the first orientation of the irrigation assembly (4); wherein the first detection means (11; 11A) is in particular an angular velocity sensing sensor, preferably a gyroscope; and/or
a second detection means (11; 11B) configured to detect the second orientation of the irrigation assembly (4); wherein the second detection means (11; 11B) is in particular a geolocation means, configured to identify the actual position of the irrigation assembly (4) over time; and/or
a third detection means (11; 11C), in particular a pressure sensor, configured to detect the pressure of the liquid coming out of the irrigation assembly (4) in an area of the plot of land to be irrigated; in particular the area is detected by the second detection means (11; 11B); and/or
a fourth detection means (11; 11D) configured to detect or extrapolate the displacement speed of the irrigation assembly (4) with respect to the plot of land; and/or
a fifth detection means (11; 11E), in particular a flowmeter, configured to detect or extrapolate the actual flow rate of the liquid coming out of the irrigation assembly (4) in an area of the plot of land; in particular, the area is detected by the second detection means (11; 11B); and/or
a sixth detection means (11; 11F), in particular an accelerometer, configured to detect oscillations about one or more axes (X, Y, Z) of the irrigation assembly (4), vibrations or impulses, in particular blows or impacts, of the irrigation assembly (4); and/or
a combination of at least two of the above.

10. A computer program comprising instructions which, when executed by a command and/or control apparatus (1) according to claim 7, cause the command and/or control apparatus (1) to execute the steps of the method according to any one of claims 1 to 6.
